# EUROPEAN PATENT APPLICATION

(11) **EP 4 033 200 A1**
(43) Date of publication of application: **27.07.2022**
(21) Application number: 20867565.2
(22) Date of filing: 11.08.2020
(51) Int. Cl.: G01B 7/06, B60C 19/00

(54) **PNEUMATIC TIRE**

(30) Priority: 25.09.2019 JP 2019174292
(71) Applicant: Sumitomo Rubber Industries, Ltd., Kobe-shi, Hyogo 651-0072 (JP)
(72) Inventor: SETOKAWA, Hiroto, Kobe-shi, Hyogo 651-0072 (JP); OCHI, Jun, Kobe-shi, Hyogo 651-0072 (JP)
(74) Representative: Manitz Finsterwald Patent- und Rechtsanwaltspartnerschaft mbB
(86) International application number: PCT/JP2020/030588
(87) International publication number: WO 2021/059786

(57) **Abstract**

Provided is a pneumatic tire with which measurement of the strength of a magnetic field, which changes with wear, can be carried out regularly with stability and sufficient detection sensitivity so that the wear state of the tire can be ascertained regularly with accuracy. In this pneumatic tire, in a tread part where a pattern of protrusions and recessed grooves has been formed, a recess of a prescribed shape is formed in one or more of the protrusions so as to extend radially inward from the ground contact surface. A soft magnetic body formed by dispersing a granular soft magnetic material in a polymer material is embedded in the recess. A magnet formed using a hard magnetic material is provided radially inward from the soft magnetic body. A magnetic circuit formed by the soft magnetic body and magnet forms a magnetic field having a prescribed strength in the thickness direction of the protrusion. A magnetic sensor for detecting the magnetic flux density of the magnetic field formed by the magnetic circuit is disposed at a radially inward position corresponding to the soft magnetic body.

## Description

### [TECHNICAL FIELD]

The present invention relates to pneumatic tires for vehicles such as automobiles.

### [BACKGROUND ART]

In a pneumatic tire (hereinafter simply referred to as "tire") mounted on a vehicle, the tread portion in contact with the ground wears as the vehicle runs, and the tread groove gradually becomes shallower. When the depth of the tread groove becomes shallow beyond the wear limit, slippage occurs during running, and the risk of accident occurrence increases. For this reason, it has been conventionally managed to control so that the wear amount of the tread portion does not exceed the wear limit, and when the wear limit is reached, it is determined that the tire is replaced at an earlier time to ensure safety during running.

As a method of checking the wear state of the tread portion specifically, in general, a mark such as a slip sign is provided in the tread portion, and when this mark appears, it is judged that the wear amount has reached the wear limit. However, general users cannot be expected too much about the reliable check of this mark. Thus, instead of visual confirmation by such a user, have been proposed technologies by which the user can grasp the tire wear state technically and accurately recognize that the tires came in time for replacement.

For example, a tire wear limit detecting device has been developed, in which a detected object made of a magnetic material is buried at a place where wear becomes at the wear limit, and a magnetic sensor or the like is used as a detecting means to detect the detected object exposed by wear and detects the tire of the wear limit (for example, Patent Document 1). And a tire wear measurement method has been developed, in which the wear of tire is detected by detecting the magnetic field changing in accordance with the shape change of a magnetic body buried in a groove portion of a tread or in a tire according to the wear of tread portion (for example, Patent Document 2).

### [PRIOR ART DOCUMENT]

### [PATENT DOCUMENT]

Patent Document 1: JU-A-62-83704
Patent Document 2: JP-B-4054196

### [SUMMARY OF THE INVENTION]

### [PROBLEMS TO BE SOLVED BY THE INVENTION]

However, in both the tire wear limit detection device of Patent Document 1 and the tire wear measurement method of Patent Document 2, the detection means such as a magnetic sensor is provided in the vehicle body side, for example, in a wheelhouse. Therefore, the magnetic body can be detected only when the magnetic body provided on the rotating tire side approaches the detection means, and only intermittent measurement is possible. Further, since the positional relationship between the detection means and the magnetic body is easy to change due to the inclination of the vehicle body, the road surface condition during running, the tire air pressure, etc., it is impossible to stably and accurately measure the strength of the magnetic field. Therefore, in response to a strong demand for safety of vehicles in recent years, a pneumatic tire capable of more accurately grasping the tire wear state is required.

Therefore, an object of the present invention is to provide a pneumatic tire capable of grasping the wear state of a tire regularly and accurately by measuring the strength of a magnetic field changed by wear regularly, stably and accurately.

### [MEANS FOR SOLVING PROBLEMS]

The present inventors have conducted extensive studies in order to solve the above problems. As a result, it was found that the above problems can be solved by inventions mentioned below, and thus the present invention has been completed.

The invention according to claim 1 is;
a pneumatic tire characterized in that
in the tread portion in which the pattern is formed by a convex portion and a concave groove,
a concave portion having a predetermined shape is formed in one or more of the convex portions from the ground contact surface side to inward in the radial direction,
a soft magnetic body formed by dispersing powdery or granular soft magnetic material in a polymer material is embedded in the concave portion.
a magnet formed of a hard magnetic material is provided at radially inward from the soft magnetic body,
a magnetic field having a predetermined strength is formed in the thickness direction of the convex portion by the magnetic circuit formed by the soft magnetic material and the magnet, and
a magnetic sensor for detecting the magnetic flux density of the magnetic field formed by the magnetic circuit is disposed at a radially inward position corresponding to the soft magnetic body.

The invention according to claim 2 is;
the pneumatic tire according to claim 1, wherein the positions where the magnet and the magnetic sensor are disposed are the lumen surface.

The invention according to claim 3 is;
the pneumatic tire according to claim 1 or 2, wherein the soft magnetic material is one soft magnetic powder or two or more soft magnetic powders selected from iron, silicon steel, iron-nickel alloy, iron-silicon alloy, iron-silicon-aluminum alloy, iron-cobalt alloy, iron-cobalt-aluminum alloy, soft ferrite, amorphous magnetic alloy, a nanocrystal magnetic alloy, and a ferrite-based stainless steel.

The invention according to claim 4 is;
the pneumatic tire according to any one of claims 1 to 3, wherein
a plurality of plate-shaped soft magnetic bodies having a predetermined thickness and a plurality of plate-shaped polymer members having a predetermined thickness formed of the polymer material are stacked alternately in the radial direction, and are embedded.

The invention according to claim 5 is
the pneumatic tire according to any one of claims 1 to 4, wherein the magnet is any one of an alnico-based magnet, a ferrite-based magnet, a samarium-cobalt-based magnet, a samarium-based magnet, and a neodymium-based magnet.

The invention according to claim 6 is;
the pneumatic tire according to any one of claims 1 to 5, wherein
the magnetic sensor for detecting the magnetic flux density of the magnetic field formed by the magnetic circuit, a power supply, and a transmission / reception device are housed in a sensor module and provided on the lumen surface corresponding to the position of the concave portion.

### [EFFECT OF THE INVENTION]

According to the present invention, there is provided a pneumatic tire capable of grasping the wear state of a tire regularly and stably by measuring the strength of a magnetic field that changes due to wear regularly, stably, with sufficient detection sensitivity, and accurately.

### [BRIEF EXPLANATION OF DRAWINGS]

[FIG. 1] Schematic cross-sectional view illustrating the arrangement of a soft magnetic body and the configuration of a magnetic circuit in a pneumatic tire according to an embodiment of the present invention.
[FIG. 2] Schematic cross-sectional view illustrating an arrangement of a soft magnetic body and a method of forming a magnetic circuit in a pneumatic tire according to another embodiment of the present invention.
[FIG. 3] Schematic cross-sectional view illustrating the arrangement of magnetic sensor in a pneumatic tire according to an embodiment of the present invention.
[FIG. 4] Schematic cross-sectional view illustrating the arrangement of a magnetic sensor in a pneumatic tire according to another embodiment of the present invention.

### [EMBODIMENTS FOR CARRYING OUT THE INVENTION]

Hereinafter, the present invention will be described with reference to the drawings based on the embodiments.

### [1] Pneumatic tire according to the present embodiment

### 1. Outline of pneumatic tire according to this embodiment

First, an outline of the pneumatic tire according to the present embodiment will be described.

In the pneumatic tire according to the present embodiment, a magnetic circuit is formed by a soft magnetic body formed by dispersing powdery or granular soft magnetic material in a polymer material and embedded in a concave portion formed in a convex portion of a tread portion, and a magnet formed of a hard magnetic material provided inward in the radial direction; and the magnetic flux density in the magnetic field formed by the magnetic circuit is detected by the magnetic sensor disposed at a radially inward position corresponding to the soft magnetic body.

The soft magnetic body embedded in the concave portion is formed by dispersing the powdery or granular soft magnetic material in the polymer material, and wears as the tire wears caused by running the vehicle, and, according to this, the magnetic flux density of the magnetic field of the magnetic circuit formed between the soft magnetic body and the magnet changes. At this time, since the magnetic sensor for detecting the magnetic flux density is disposed at a radially inward position corresponding to the soft magnetic body, that is, on the tire itself, the continuous change of the magnetic flux density of the magnetic field of the magnetic circuit described above can be measured by the magnetic sensor, and the wear state of the tire mounted on the vehicle can be grasped over time. Further, even when the tire is affected by the inclination of the vehicle body, the properties of the road surface during running, the air pressure of the tire, and the like, the positional relationship between the magnetic sensor and the soft magnetic body can be maintained constant. As a result, the change in the magnetic flux density of the magnetic field of the magnetic circuit can be stably and accurately measured, and the wear state of the tire can be grasped with high accuracy.

Further, since a magnetic circuit is formed between a magnet formed of a hard magnetic material and a soft magnetic body that becomes smaller due to wear, the magnetic flux density of the magnetic field of the magnetic circuit detected by the magnetic sensor increases with wear of the soft magnetic body. As a result, it is possible to measure the change in the magnetic flux density of the magnetic field of the magnetic circuit sufficiently stably and accurately, and to grasp the wear state of the tire with sufficiently high accuracy. Further, since the soft magnetic material does not need to be magnetized, a large equipment for magnetizing is not required.

### 2. Characteristic part of pneumatic tire according to this embodiment (1) Disposition of soft magnetic body and configuration of magnetic circuit

As described above, in the pneumatic tire according to the present embodiment, a concave portion is formed in one or more of the convex portions of the tread portion inward in the radial direction from the ground contact surface side, a soft magnetic body formed by dispersing the powdery and granular soft magnetic material in a polymer material is embedded in the concave portion, and a magnetic circuit is formed in the thickness direction of the convex portion by a magnet formed of a hard magnetic material and provided inward in the radial direction and the soft magnetic body.

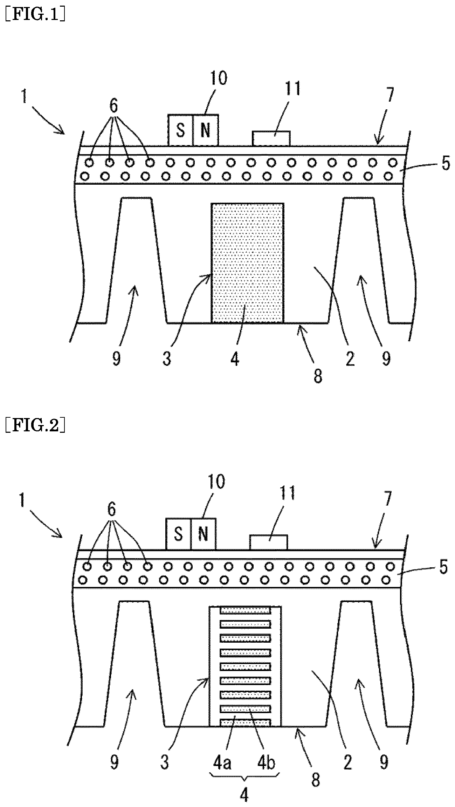

FIG. 1 is a schematic cross-sectional view illustrating the dispositions of the magnet formed of a hard magnetic material and the soft magnetic body and the configuration of a magnetic circuit in a pneumatic tire according to the present embodiment, and showing one convex portion surrounded by concave grooves. In FIG. 1, in the tread portion 1, a convex portion 2 is formed and surrounded by concave grooves 9, and is in contact with the ground at the ground contact surface 8. In the convex portion 2, a concave portion 3 having a predetermined shape is provided from the ground contact surface 8 toward the inside in the radial direction of the tire, and the soft magnetic body 4 is embedded therein. And, 5 is a breaker, 6 is a breaker cord, 7 is a lumen surface, and 10 is a magnet made of a hard magnetic material.

Further, 11 is a magnetic sensor.

In the present embodiment, as shown in FIG. 1, the soft magnetic body 4 is embedded in the concave portion 3, and
the magnet 10 is disposed on the lumen surface 7 inward in the radial direction of the soft magnetic body 4. As a result, the soft magnetic body 4 is magnetized by the magnet 10, a magnetic circuit is formed between the soft magnetic body 4 and the magnet 10, and a magnetic field having a predetermined strength is formed along the magnetic circuit. Specifically, a magnetic circuit is formed between one pole of the magnet 10 and the end face of the soft magnetic body 4 inward in the radial direction, and a magnetic field having a predetermined strength is formed along the magnetic circuit. The soft magnetic body wears and deforms together with the convex portion 2 that wears as the tire running. Then, since the magnetic circuit changes and the strength of the magnetic field changes with the deformation of the soft magnetic body 4, it is possible to know the wear state of the tire by knowing the amount of change in the magnetic flux density of the magnetic field by the magnetic sensor 11.

As the soft magnetic body 4, a soft magnetic body in which powders or granules (soft magnetic powder) of the soft magnetic material are dispersed in a polymer material and which is formed according to the shape of the concave portion 3 is used.

Such a soft magnetic body has a lower hardness than a normal hard magnetic member, and wears to the same extent as the convex portion of the tread, and uneven wear is unlikely to occur. In addition, since it is not easily affected by vibration or the like caused by contact with the road surface during running, it is possible to sufficiently suppress deterioration of the riding comfort of the vehicle.

As the soft magnetic materials, iron, silicon steel, iron-nickel alloys such as Permalloy (registered trademark), iron-silicon-based alloys such as Sendust, iron-silicon-aluminum-based alloys, iron-cobalt-based alloys such as permendur, iron-cobalt-aluminum-based alloys, soft ferrites, amorphous magnetic alloys, nanocrystal magnetic alloys, ferrite-based stainless steel, and the like can be mentioned preferably from the viewpoint of being easily available, inexpensive, or capability of forming relatively stronger magnetic field. Further, two or more kinds of the above-mentioned soft magnetic materials can be selected and used.

The particle size of the soft magnetic powder is preferably 400 *µ* m or less, more preferably 250 *µ* m or less, further preferably 10 *µ* m or less, considering the dispersibility in the polymer material at the time of forming the soft magnetic body and the wear resistance due to being metal particles.

Further, as the polymer material, a resin material or a rubber material capable of exhibiting elasticity in a cured state is preferable from the viewpoint of sufficiently exhibiting the characteristics of a tire, and a resin material or a rubber material capable of exhibiting the same wear characteristics after curing as the tread rubber is preferable from the viewpoint that the soft magnetic body formed by dispersing soft magnetic powder wears in the same manner as the tread rubber to provide a stable ride comfort.

Among the above-mentioned polymer materials, considering that the portion where the soft magnetic body is provided is the tread portion, a rubber material having the same composition as the tread rubber composition used for the tread portion is preferable. That is, the soft magnetic body is preferably formed by dispersing the soft magnetic powder in a rubber material having the same composition as the tread rubber composition. For example, a part of the filler in the composition of the tread rubber composition may be replaced with the soft magnetic powder to make the composition for forming the soft magnetic body. The blending amount of the soft magnetic powder in the soft magnetic body is preferably 10 to 70% by mass, more preferably 30 to 70% by mass, and further preferably 40 to 70% by mass.

For the formation of the soft magnetic body 4, the above-mentioned soft magnetic powder and polymer material are appropriately selected and appropriately blended. Specifically, a method of filling the concave portion 3 with a soft magnetic material that has been blended and kneaded, so that the blending amount of the soft magnetic powder in the soft magnetic body is 10 to 70 mass by mass, before curing the polymer material and then curing the polymer material can be used.

Further, apart from the molding of the tire, a method of forming materials for the soft magnetic body into a predetermined shape by using, for example, a mold and then curing the polymer material can be used. In the case of this method, the formed soft magnetic body 4 is embedded in the concave portion 3. The means for embedding the soft magnetic body 4 in the concave portion 3 is not particularly limited, but screwing or fitting can be mentioned as preferable means. Specifically, while forming a female screw portion on the inner wall of the concave portion, a male screw portion is provided on the side surface of the soft magnetic body to form a screw shape, and by screwing both, the soft magnetic body is embedded and fixed in the concave portion. Further, the soft magnetic body can be appropriately embedded and fixed in the concave portion by forming the concave portion in a wedge shape and driving a soft magnetic body formed in the corresponding shape, for example, a soft magnetic body having a reverse taper shape.

Then, in the present embodiment, the concave portion 3 is preferably formed so as to enter inwardly from the thickness of the tread portion 1 determined to be replaced. As the specific depth of the concave portion 3, that is, the length of the soft magnetic body 4 is preferably 80 to 130% of the thickness of the convex portion 2. As a result, the amount of change in the magnetic flux density can be detected until the tread portion 1 reaches the wear limit, and the wear state can be grasped over time.

Further, as another embodiment, a forming method can be used in which the soft magnetic body 4 is provided as a stacked body formed by stacking a plurality of plate-shaped soft magnetic bodies 4b and a plurality of plate-shaped polymer member 4a formed of a polymer material and having a predetermined thickness alternately in the radial direction as shown in FIG. 2, and the stacked body is embedded in the concave portion 3 to form the soft magnetic body 4 in the convex portion 2. The outer peripheral surface of the soft magnetic body 4 in the thickness direction may be covered with the same polymer material as the plate-shaped polymer member 4a.

This forming method is preferable because a clear magnetic change occurs every time the number of plate-shaped soft magnetic bodies decreases by one, so that it can be easily determined that the soft magnetic body has been worn. The soft magnetic body 4 may be embedded in the concave portion 3 after forming a stacked body in which a plate-shaped soft magnetic body 4b and a plate-shaped polymer member 4a are stacked, or the stacked body may be formed by stacking them in the concave portion 3.

The magnet 10 is formed by using a hard magnetic material, and, as shown in FIGS. 1 and 2, disposed on the lumen surface 7 of the soft magnetic body 4 inward in the radial direction so that a magnetic field is formed between one pole, for example, N pole and end face of the soft magnetic body 4 inward in the radial direction. A permanent magnet that forms a magnetic field of a constant strength is used as the magnet, and the magnet is disposed so that the distance between the N pole and the end face of the soft magnetic body 4 is constant. This makes it possible to form a magnetic circuit in which a magnetic field having a constant magnetic flux density is formed between the N pole and the end face of the soft magnetic body 4.

The type of the magnet 10 is not particularly limited as long as it is a permanent magnet formed by using a hard magnetic material. However, from the viewpoint that the coercive force after magnetization is large and the magnet is not easily demagnetized, alnico magnets with aluminum, nickel, cobalt and iron as the main component, ferrite magnets with iron oxide as the main component, samarium-based magnets such as samarium cobalt-based magnets with samarium and cobalt as the main components and samarium iron-nitrogen magnets with samarium, iron and nitrogen as the main components, and neodymium-based magnets with neodymium, iron and boron as main components can be preferably mentioned.

And, as a specific alnico magnet, Al-Ni-Co-Fe- Cu and the like, as a ferrite magnet, Fe₂O₃-SrO and the like, as samarium cobalt magnets, Sm-Co-Fe -Cu and the like, as samarium-cobalt-nitrogen magnets, Sm-Fe-N and the like, and as neodymium-based magnets, Nd-Fe-B-Dy, Nd-Fe-Nb-B, and Nd-Pr-Fe-Nb-B and the like can be mentioned.

### (2) Magnetic sensor

As described above, the magnetic flux density of the magnetic field of the magnetic circuit formed by the magnet formed of the hard magnetic material and the soft magnetic body changes due to the wear of the soft magnetic body that wears according to the wear of the tire, and the amount of change is measured by a magnetic sensor provided on the tire.

In FIGS. 1 and 2, the magnetic sensor 11 is provided on lumen at a radially inward position corresponding to the soft magnetic body 4. At this time, the magnetic sensor 11 is provided at a predetermined position in the magnetic field of the magnetic circuit.

By disposing the magnetic sensor 11 as described above on the tire on which the soft magnetic body 4 and the magnet 10 are disposed as described above, the wear state of the tire can be regularly grasped with high accuracy from the amount of change in the magnetic flux density, since the magnetic flux density of the magnetic field can be regularly, stably and accurately detected and measured without being affected by the inclination of the vehicle body, the properties of the road surface during running, the air pressure of the tire, and the like.

As specific examples of the magnetic sensors, Hall elements, magnetoresistive elements (MR), a magnetic impedance (MI) element or the like can be preferably mentioned, from the viewpoint that they are small in size that can be attached to the lumen surface of the tire and can sufficiently withstand the vibration and deformation of rotating tires. Among these, a magnetoresistive element is more preferable from the viewpoint of accuracy.

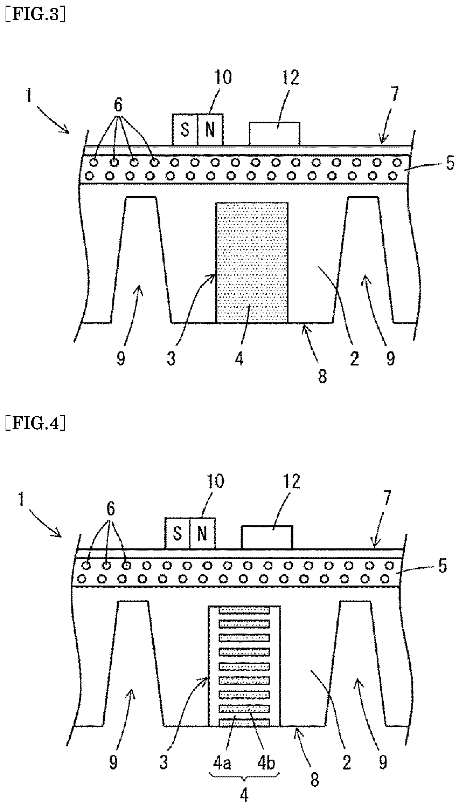

FIGS. 3 and 4 are views showing another example of the disposition of the magnetic sensor on the tire. In FIGS. 3 and 4, the magnetic sensor is housed in the sensor module 12 which is disposed in the lumen surface 7 at a radially inward position corresponding to the position of the concave portion 3, that is, placed in a predetermined position in the magnetic field formed between the magnet 10 and the soft magnetic body 4.

When the magnetic sensor is housed in the sensor module 12 in this way, it is preferable that a transmission / reception device having a receiving unit for receiving the data detected by the magnetic sensor and a transmission unit for transmitting the received data by wire or wirelessly to the wear state determination device installed in the vehicle body, a power supply, and the like are housed together in the sensor module 12 in addition to the magnetic sensor.

Further, in addition to the magnetic sensor 11, the sensor module 12 may also include a pressure sensor for detecting the internal pressure of the tire, a temperature sensor for measuring the temperature, an acceleration sensor for detecting the acceleration, and the like. By using a plurality of sensors, in addition to the magnetic flux density, the internal pressure of the tire, the temperature of the tire, the acceleration data, etc. can be acquired in real time. Then, by comprehensively analyzing each data acquired by these multiple sensors, it is possible to grasp the tire condition in more detail, and the tire can be used effectively for the automatic driving control of vehicles expected in the future.

The sensor module 12 is not limited to the above configuration, but may be configured so that it is equipped with a storage unit, described later, that stores collation data indicating the relationship between the amount of wear and the magnetic flux density, and a measuring unit that measures the wear state of the tread portion based on the magnetic flux density detected by the magnetic sensor 11 using a collation data stored in the storage unit, and transmits the wear state data measured by the measuring unit to a device provided in the vehicle body by the transmitting unit.

As a method of mounting the sensor module 12 to the tire, for example, a method of installing the sensor module 12 to a socket provided on the lumen surface of tire, a method of directly adhering it to the lumen surface, a method of embedding it in the tire, and the like can be adopted appropriately. Among these, mounting the sensor module on the socket provided on the lumen surface of tire is particularly preferable because it is easy to mount and replace.

### [2] A method for manufacturing a pneumatic tire according to the present embodiment

The pneumatic tire according to the present embodiment can be manufactured by a manufacturing method which includes a concave portion forming step, a soft magnetic body embedding step, and a magnetic circuit forming step in which a magnetic circuit is formed by disposing a magnet of a hard magnetic material, in addition to the normal manufacturing process of the pneumatic tire. Hereinafter, the concave portion forming step, the soft magnetic body embedding step and the magnetic circuit forming step will be described.

### 1. Concave portion forming step

This step is a step of forming a concave portion for embedding a soft magnetic body in one or more of the convex portions of the tread portion of the vulcanized pneumatic tire from the ground contact surface side to inward in the radial direction.

Specifically, one or more of the tread portions of the vulcanized pneumatic tire are drilled inward in the radial direction from the ground contact surface side using a drilling jig such as a cork borer, a drill or a hole cutter, and a concave portion is formed. Among the drilling jigs, a cork borer is preferable in consideration of the ease of drilling work.

Instead of drilling the vulcanized pneumatic tire, using a vulcanization mold having a concave portion in the tread portion of, for example, a vulcanization mold for studded tires, the concave portion is formed at the same time as the vulcanization molding.

### 2. Soft magnetic body embedding process

This step is a step of embedding a separately produced soft magnetic body in the concave portion formed in the concave portion forming step. In the following, first, the production of the soft magnetic body will be described, and then the embedding of the soft magnetic body will be described.

### (1) Fabrication of soft magnetic body

The soft magnetic material formed by dispersing the powdery or granular soft magnetic material in the polymer material, as described above, can be produced by appropriately selecting the powdery or granular soft magnetic material and the polymer material, appropriately blending and dispersing the powdery or granular material in the polymer material, and then, forming a predetermined shape, that is, a shape suitable for embedding the soft magnetic body performed in the next step.

On the other hand, the soft magnetic body in which a plurality of plate-shaped soft magnetic bodies and plate-shaped polymer members are alternately stacked can be produced by alternately stacking, for example, via an adhesive, a plate-shaped soft magnetic body and a plate-shaped polymer member, which were manufactured to a predetermined shape and dimensions, and then adhering the plate-shaped soft magnetic body and the plate-shaped polymer member with an adhesive.

### (2) Embedding of soft magnetic body

When embedding the produced soft magnetic body in the concave portion, the above-mentioned screwing or fitting can be adopted.

### 3. Magnetic circuit forming step

The magnetic circuit is formed by disposing a magnet formed of a hard magnetic material on the lumen surface as described above. As a result, a magnetic circuit is formed between one pole of the magnet and the end face of the soft magnetic body inward in the radial direction, and a magnetic field having a predetermined strength is formed.

### [3] Method for measuring tire wear

Next, a wear measuring method for the tire according to the present embodiment will be described.

In the present embodiment, the wear state of the above-mentioned pneumatic tire is measured according to the following procedure.

### 1. Preliminary data acquisition

Prior to the measurement, the magnetic flux density of the magnetic field of the magnetic circuit, which changes due to the wear of the soft magnetic body, is measured in advance with a magnetic sensor for the same type of tire as the measurement target, and data is acquired.

Specifically, first, the magnetic flux density of the magnetic field of the magnetic circuit in a new tire (the same type of tire as the measurement target) immediately after production is measured, and then the tire is worn until the wear limit is exceeded using a tire wear drum test device. Then, on the way, the device is stopped at predetermined time intervals, and the amount of wear and the magnetic flux density at that time are measured.

After that, based on the measured wear amount and magnetic flux density at each time point, collation data showing the relationship between the wear amount and the magnetic flux density is created, and the created data is stored in a wear state determination device provided in the vehicle body.

### 2. Installation of the tire to be measured on the actual vehicle and running

Next, the tire to be measured is installed to an actual vehicle and the vehicle runs. As the vehicle runs, the soft magnetic body wears together with the tread portion, so that the magnetic flux density of the magnetic circuit detected by the magnetic sensor changes.

Then, by collating the amount of change in the magnetic flux density of this magnetic circuit measured by the magnetic sensor with the data previously acquired in the wear state determination device, it can be determined to what extent the wear has progressed to in the tire to be measured.

In measuring the magnetic flux density, the influence of changes in the magnetic flux density (disturbance) caused by changes in the external magnetic field may be considered. However, since these influences appear as large changes, unlike the magnetic flux density of the magnetic circuit which changes gradually as the tire gradually wears, these disturbances can be eliminated by performing statistical processing.

As described above, the tire according to the present embodiment maintains the position of the magnetic sensor in the magnetic circuit constant and the magnetic flux density of the magnetic circuit, which changes according to the wear, can be measured regularly, stably and accurately, by applying the wear measurement method described above. As a result, the wear state of the tire can be measured more accurately and stably.

Although the present invention has been described above based on the embodiments, the present invention is not limited to the above embodiments. Various modifications can be made to the above embodiments within the same and equal range as the present invention.

### [DESCRIPTION OF THE REFERENCE NUMERALS]

- 1: Tread portion
- 2: Convex portion
- 3: Concave portion
- 4: Soft magnetic body
- 4a: Plate-shaped polymer member
- 4b: Plate-shaped soft magnetic body
- 5: Breaker
- 6: Breaker code
- 7: Lumen surface
- 8: Ground contact surface
- 9: Concave groove
- 10: Magnet
- 11: Magnetic sensor
- 12: Sensor module

## Claims

1. A pneumatic tire **characterized in that**
in the tread portion in which the pattern is formed by a convex portion and a concave groove,
a concave portion having a predetermined shape is formed in one or more of the convex portions from the ground contact surface side to inward in the radial direction,
a soft magnetic body formed by dispersing powdery or granular soft magnetic material in a polymer material is embedded in the concave portion.
a magnet formed of a hard magnetic material is provided at radially inward from the soft magnetic body,
a magnetic field having a predetermined strength is formed in the thickness direction of the convex portion by the magnetic circuit formed by the soft magnetic material and the magnet, and
a magnetic sensor for detecting the magnetic flux density of the magnetic field formed by the magnetic circuit is disposed at a radially inward position corresponding to the soft magnetic body.

2. The pneumatic tire according to claim 1, wherein the positions where the magnet and the magnetic sensor are disposed are the lumen surface.

3. The pneumatic tire according to claim 1 or 2, wherein the soft magnetic material is one soft magnetic powder or two or more soft magnetic powders selected from iron, silicon steel, iron-nickel alloy, iron-silicon alloy, iron-silicon-aluminum alloy, iron-cobalt alloy, iron-cobalt-aluminum alloy, soft ferrite, amorphous magnetic alloy, a nanocrystal magnetic alloy, and a ferrite-based stainless steel.

4. The pneumatic tire according to any one of claims 1 to 3, wherein a plurality of plate-shaped soft magnetic bodies having a predetermined thickness and a plurality of plate-shaped polymer members having a predetermined thickness formed of the polymer material are stacked alternately in the radial direction, and are embedded.

5. The pneumatic tire according to any one of claims 1 to 4, wherein the magnet is any one of an alnico-based magnet, a ferrite-based magnet, a samarium-cobalt-based magnet, a samarium-based magnet, and a neodymium-based magnet.

6. The pneumatic tire according to any one of claims 1 to 5, wherein the magnetic sensor for detecting the magnetic flux density of the magnetic field formed by the magnetic circuit, a power supply, and a transmission / reception device are housed in a sensor module and provided on the lumen surface corresponding to the position of the concave portion.
